# NEUE EUROPÄISCHE PATENTSCHRIFT

(11) **EP 1 015 504 B2**
(45) Veröffentlichungstag und Bekanntmachung des Hinweises auf die Entscheidung über den Einspruch: **05.01.2005**
(45) Hinweis auf die Patenterteilung: 02.01.2003
(21) Anmeldenummer: 98954254.3
(22) Anmeldetag: 05.09.1998
(51) Int. Cl.: C08F 210/02, C08F 2/00

(54) **VERFAHREN ZUR COPOLYMERISATION VON ETHYLEN MIT VINYLCARBOXYLATEN**
METHOD FOR COPOLYMERIZING ETHYLENE WITH VINYL CARBOXYLATES
PROCEDE DE COPOLYMERISATION D'ETHYLENE AVEC DES CARBOXYLATES DE VINYLE

(30) Priorität: 18.09.1997 DE 19741097
(43) Veröffentlichungstag der Anmeldung: 05.07.2000
(73) Patentinhaber: BASF AKTIENGESELLSCHAFT, 67056 Ludwigshafen (DE)
(72) Erfinder: DECKERS, Andreas, D-55234 Flomborn (DE); WEBER, Wilhelm, D-67435 Neustadt (DE); ANNEN, Ulrich, D-67454 Hassloch (DE)
(86) Internationale Anmeldenummer: PCT/EP1998/005621
(87) Internationale Veröffentlichungsnummer: WO 1999/014251

(56) Entgegenhaltungen:
- EP-A- 0 082 502
- EP-A- 0 449 092
- EP-A- 0 475 124
- EP-A- 0 779 341
- DD-A- 269 297
- DD-A- 292 465
- DE-A- 2 131 445
- DE-A- 2 340 743
- DE-A- 2 403 516
- GB-A- 979 552
- JP-A- 58 108 216

## Beschreibung

Gegenstand der vorliegenden Erfindung ist ein Verfahren zur Copolymerisation von Ethylen mit Vinylestem und gewünschtenfalls weiteren vinylischen Comonomeren in einem Rohrreaktor bei Drücken von 500 bis 4000 bar und Temperaturen von höchstens 220°C.

Weiterhin sind Gegenstand der vorliegenden Erfindung Copolymere erhältlich nach diesem Verfahren, die Verwendung der Copolymere zur Herstellung von Pigmentkonzentraten zur Kunststoffeinfärbung sowie Pigmentkonzentrate die solche Copolymere enthalten.

Copolymere aus Ethylen und Vinylestern, insbesondere Vinylacetat, und gegebenenfalls weiteren Comonomeren sind allgemein bekannt und werden beispielsweise zur Herstellung von Pigmentkonzentraten, sogenannten Masterbatches, zur Kunststoffeinfärbung verwendet. Copolymere, die für diesen Zweck Verwendung finden sollen, müssen einerseits sehr homogen mit den Pigmentpräparationen mischbar sein, um eine hohe Färbekraft und gleichmäßige Färbung zu erreichen. Dazu muß das Copolymere selbst eine ausgesprochen gute Homogenität aufweisen. Andererseits muß das Copolymer eine gute Thermostabilität aufweisen, da die Einfärbung von Kunststoffen in der Regel durch Extrusion bei hohen Temperaturen erfolgt.

In der Literatur sind verschiedene Verfahren zur Herstellung von Ethylen-Vinylacetat-Copolymeren bekannt. So beschreibt DE 15 20 227 ein Verfahren zur Synthese von Ethylen-Vinylacetat-Copolymeren in einem Rohrreaktor. Um eine möglichst vollständige und gleichmäßige Umsetzung der Monomeren zu erreichen, wird an zwei oder mehr Stellen Sauerstoff als Initiator in das Rohr eingespeist. Die Reaktionstemperatur soll dabei zwischen 200 und 250°C liegen. Über das Temperaturprofil entlang des Rohrreaktors werden weiter keine Aussagen gemacht.

In US-A 3 917 577 wird ein Verfahren zur Homopolymerisation von Ethylen in einem Rohrreaktor beschrieben. Die Polymerisation wird durch Einspeisung des Reaktionsgemisches aus Ethylen, peroxidischem Initiator und einem Polymerisationsregulator an zwei bis drei aufeinanderfolgenden Stellen des Rohrreaktors gestartet. Die Reaktionsgemische werden bei Temperaturen von 160 bis 210°C in den Reaktor eingespeist. Über den Temperaturverlauf im Reaktor wird lediglich gesagt, daß die Temperatur 160 bis 350°C betragen kann.

In EP-A 0 475 124 werden Ethylen-Vinylacetat-Copolymere beschrieben. Die Herstellung erfolgt durch Hochdruckpolymerisation bei Temperaturen zwischen 180 und 240°C. Über die Möglichkeit von Mehrfachinitiationen sowie über das Temperaturprofil im Reaktor werden keine Aussagen gemacht.

Die bekannten Ethylen-Vinylacetat-Copolymere lassen hinsichtlich ihrer Homogenität sowie hinsichtlich ihrer Thermostabilität noch zu wünschen übrig.

Der vorliegenden Erfindung lag daher die Aufgabe zugrunde, ein Verfahren zur Herstellung von Ethylen-Vinylester-Copolymeren zu finden, welches zu Copolymeren führt, die eine gute Homogenität und Thermostabilität aufweisen und sich gut zur Herstellung von Pigmentkonzentraten eignen.

Demgemäß wurde ein Verfahren zur Copolymerisation von Ethylen mit Vinylestern und gewünschtenfalls weiteren vinylischen Comonomeren in einem Rohrreaktor mit einem Verhältnis Länge zu Durchmesser im Bereich von 10000 bis 60000 bei Drücken von 500 bis 4000 bar und Temperaturen von höchstens 220°C gefunden, welches dadurch gekennzeichnet ist, daß die radikalische Polymerisation an mindestens zwei Stellen des Rohrreaktors durch Zugabe eines Katalysators/Initiators initiiert wird und das Temperaturprofil im Reaktor so eingestellt wird, daß die Temperatumtaxima hinter den Initiierungsstellen zwischer 200 und 220°C liegen und um weniger als ±10°C voneinander differieren, wobei der Anteil der Ethyleneinheiten 80-95 Gew.-%, der Anteil an Vinylestereinheiten 5-20 Gew.% und der Anteil weiterer vinylischer Comonomereinheiten 0-10 Gew.-%, jeweils bezogen auf die Gesamtmasse des Copolymeren, beträgt und das Copolymer eine Viskosität, gemessen bei 120 °C, von 8 bis 15 · 10⁻⁴ m²s aufweist.

Weiterhin wurden neue Copolymere mit verbesserten Eigenschaften gefunden, die nach diesem Verfahren erhältlich sind, sowie die Verwendung dieser Copolymeren zur Herstellung von Pigmentkonzentraten zur Kunststoffeinfärbung und derartige Pigmentkonzentrate selbst.

Bei dem erfindungsgemäßen Verfahren handelt es sich um ein typisches Hochdruck-Rohrreaktorverfahren.

Das Verfahren läßt sich unter Anwendung der üblichen kontinuierlich betriebenen röhrenförmigen Hochdruckpolymerisationssysteme (Rohrreaktoren) ausführen. Unter Rohrreaktoren versteht man rohrförmige Polymerisationsgefäße, deren Verhältnis Länge zum Durchmesser der druckfesten Rohre im allgemeinen im Bereich 10 000 bis 60 000 zu 1 liegt. Angaben über Ethylenhochdruckpolymerisations verfahren, bei denen Rohrreaktoren benutzt werden, finden sich beispielsweise in "Ullmanns Encyklopädie der technischen Chemie", 1980, 4. Auflage, Band 19, Seiten 167 bis 178, Verlag Chemie GmbH, D-6940 Weinheim.

Das überkritische Gemisch aus Ethylen, Vinylester und gegebenenfalls Regler und weiterem Comonomeren wird nach bekannten Verfahren an der Einlaßstelle und gewünschtenfalls gleichzeitig an einer weiteren Stelle hinter der Einlaßstelle entlang des Rohrreaktors in Strömungsrichtung des polymerisierenden Ethylens, wo die Reaktionstemperatur ein Maximum überschritten hat, dem Reaktor zugeführt. Unter Einlaßstelle wird im allgemeinen der Anfang des rohrförmigen Reaktors verstanden. Der Hauptstrom wird dabei am Anfang des Reaktors zugeleitet, Nebenströme können dem Reaktor in bekannter Weise an weiteren Stellen zugeführt werden.

Nach dem erfindungsgemäßen Verfahren werden vorzugsweise Copolymere hergestellt, in denen der Anteil der Ethyleneinheiten 80 bis 95 Gew.-%, der Anteil der Vinylestereinheiten 5 - 20 Gew.-% und der Anteil weiterer vinylischer Comonomereinheiten 0 - 10 Gew.-%, jeweils bezogen auf die Gesamtmasse des Copolymeren, beträgt.

Gegebenenfalls arbeitet man in Gegenwart von Polymerisationsreglern. Mit Hilfe der Polymerisationsregler ist es möglich, den Schmelzindex der entstehenden Ethylencopolymerisate einzustellen. Als Regler eignen sich beispielsweise Wasserstoff, Ketone, Aldehyde, Alkohole, Ether oder lineare und verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Molprozent, bezogen auf das zu polymerisierende Ethylen eingesetzt. In einer besonderen Ausgestaltung arbeitet man ohne zusätzliche Regler, da die eingesetzten Vinylester Reglereigenschaften besitzen.

Die Copolymerisation wird im allgemeinen in Abwesenheit eines Lösungsmittels durchgeführt. Die geringen Mengen eines inerten Lösungsmittels, wie Benzol, Mineralöl oder anderen inerten Lösungsmitteln, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Vinylester kommen sämtliche mit Ethylen bei den angegebenen Temperaturen und Druckverhältnissen copolymerisierbaren Vinylester in Betracht. Solche Comonomere sind z.B. Vinylester der Carbonsäuren mit 1 bis 8, vorzugsweise 1 bis 6 C-Atomen. Insbesondere bevorzugt ist Vinylacetat. Auch Mischungen verschiedener Vinylester können eingesetzt werden.

Das Ethylen wird mit den Vinylestern in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden, die unterschiedliche Zersetzungspunkte haben und Hydroperoxide sowie Mischungen aus Sauerstoff und Peroxiden und/oder Hydroperoxiden. Als Beispiele für Peroxide und Hydroperoxide seien genannt: tert.-Butylperoxypivalat, Di-tert.-butylperoxid, tert.-Butylhydroperoxid, tert. -Butylperbenzoat, p-Methanhydroperoxid und Dilauroylperoxid. Unter radikalischen Polymerisationsinitiatoren sollen auch Verbindungen wie Azoisobuttersäuredinitril verstanden werden. Man kann auch Mischungen aus Sauerstoff und einem oder mehreren Peroxiden verwenden. Bevorzugt wird die Copolymerisation des Ethylens mit Vinylestem durch ein oder mehrere peroxidische Verbindungen initiiert.

In untergeordneten Mengen kann das Reaktionsgemisch auch weitere Comonomere wie Propen, Buten, Penten, Hexen und höhere Olefine sowie Olefingemische enthalten.

Die Copolymerisation findet vorzugsweise bei Drücken von 1000 bis 3000 bar, besonders bevorzugt von 1500 bis 2500 bar statt. Die Temperatur darf 220°C nicht überschreiten, da sonst in spürbaren Mengen der Vinylester gespalten wird und die entsprechende Säure freigesetzt wird. Dies führt zu einer Beeinträchtigung der Thermostabilität der Copolymere. Die Temperaturmaxima liegen zwischen 200 und 220°C.

Die radikalische Polymerisation wird an mindestens 2 Stellen des Rohrreaktors, vorzugsweise an 3, 4 oder 5 Stellen und besonders bevorzugt an 4 Stellen des Rohrreaktors durch Zugabe des Katalysators/Initiators initiiert. Eine Stelle befindet sich zweckmäßig am Anfang des Reaktors, die anderen werden so über die Reaktorlänge verteilt, daß eine möglichst gleichmäßige Temperaturführung erreicht wird. Hinter diesen Initiierungsstellen steigt die Temperatur durch die exotherme Polymerisation an. Wichtig ist es, daß die Durchsatzgeschwindigkeit und die zugegebenen Initiatormengen so abgestimmt werden, daß die Temperaturmaxima hinter den Initiierungsstellen zwischen 150 und 220°C liegen und um weniger als ± 10°C, vorzugsweise um weniger als ± 5°C und besonders bevorzugt um weniger als ± 2°C voneinander differieren.

Die nach dem erfindungsgemäßen Verfahren erhältlichen Copolymere weisen eine bisher nicht bekannte Homogenität und Thermostabilität auf. Sie eignen sich daher ausgezeichnet zur Verwendung bei der Herstellung von Pigmentkonzentraten zur Kunststoffeinfärbung.

Die Herstellung dieser Pigmentkonzentrate kann in bekannter Weise, also beispielsweise durch Schmelzextrusion erfolgen. Vorteilhaft sind für diese Verwendung besonders Copolymere, die eine Viskosität, gemessen bei 120°C, von 8-15x10 m²/s (800 bis 1500 cst.) aufweisen. Die Einstellung der gewünschten Viskosität wird im allgemeinen durch den Einsatz geeigneter Regler, wie sie oben beschrieben wurden, bei der Polymerisation erreicht.

Die erfindungsgemäßen Pigmentkonzentrate lassen sich infolge ihrer Homogenität hervorragend zur Einfärbung von Kunststoffen, besonders von Polyethylen und Ethylencopolymeren einsetzen. Sie zeigen ausgezeichnetes Färbeverhalten und gute Thermostabilität.

### Beispiele

In einem Rohrreaktor von 200 m Länge und 15 mm Durchmesser wurden Copolymerisationen bei einem Durchsatz von 1400 kg Ethylen und 41 kg Vinylacetat/Stunde durchgeführt. Das Monomerengemisch wurde zusammen mit Propionaldehyd als Regler (3,5 kg/Stunde) an einer Stelle am Anfang des Reaktors eingespeist. Das Monomerengemisch wurde vor der ersten Initiierung auf 170°C vorgeheizt. Der Druck im Reaktor betrug 2300 bar. Die Initiierung erfolgte durch Zugabe einer Lösung von 0,05 M tert.-Butylperpivalat (TBPP) und 0,05 M tert.-Butylperisononanoat (TBPiN) in Isododecan an 4 Stellen des Reaktors (Abstand der Zugabestellen voneinander ca. 50 m). Die Temperatur wurde alle 20 m über den Reaktor verteilt gemessen und die Temperaturmaxima wurden durch Regelung der Initiatorzugabe auf die gewünschten Werte eingestellt.

Die erhaltenen Copolymerisate wurden auf Thermostabilität (gemessen als Gewichtsverlust nach Erhitzen für 60 Minuten auf 220°C) und Farbstärke untersucht. Die Farbstärke wurde photometrisch an Extrudaten aus 25 Gew.-% Ultramarinblau-Pigment, 15 Gew.-% Copolymerisat (zunächst untereinander coextrudiert) und 60 Gew.-% Polyethylen (Lupolen® 1840 D, Hersteller BASF) bestimmt und auf das Vergleichsbeispiel V-3 bezogen.

Die folgende Tabelle zeigt die Ergebnisse der Versuche. Die erfindungsgemäß hergestellten Copolymerisate zeigen eine höhere Farbstärke als konventionell hergestellte Copolymerisate und gleichzeitig eine ausgezeichnete Thermostabilität.

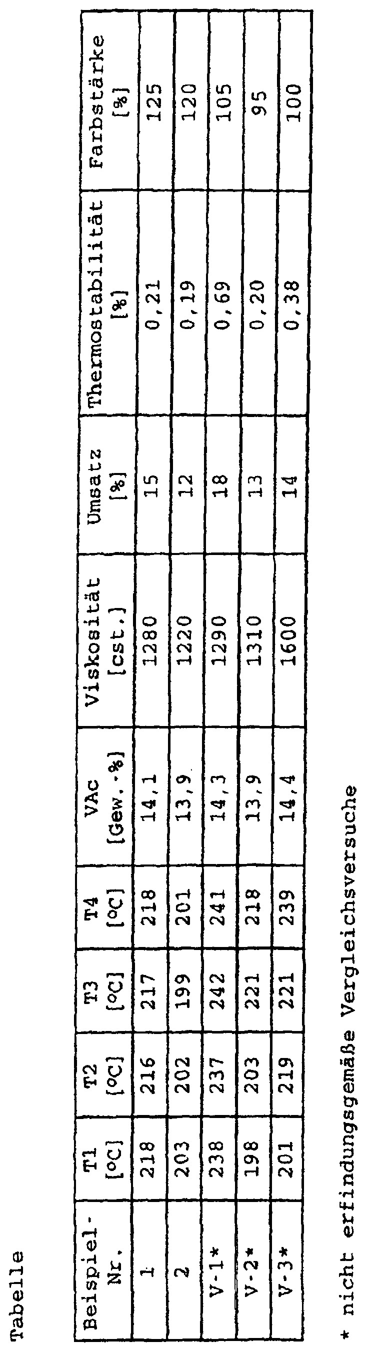

## Patentansprüche

1. Verfahren zur Copolymerisation von Ethylen mit Vinylestem und gewünschtenfalls weiteren vinylischen Copolymeren in einem Rohrreaktor mit einem Verhältnis Länge zu Durchmesser im Bereich von 10000 bis 60000 bei Drücken von 500 bis 4000 bar und Temperaturen von höchstens 220 °C, **dadurch gekennzeichnet, daß** die radikalische Polymerisation an mindestens zwei Stellen des Rohrreaktors durch Zugabe eines Katalysators/Initiators initiiert wird und das Temperaturprofil im Reaktor so eingestellt wird, daß die Temperaturmaxima hinter den Initiierungsstellen zwischen 200 und 220 °C liegen und um weniger als ±10 °C voneinander differieren, wobei der Anteil der Ethyleneinheiten 80-95 Gew.-%, der Anteil an Vinylestereinheiten 5-20 Gew.-% und der Anteil weiterer vinylischer Comonomereinheiten 0-10 Gew.-%, jeweils bezogen auf die Gesamtmasse des Copolymeren, beträgt und das Copolymer eine Viskosität, gemessen bei 120 °C, von 8 bis 15 · 10⁻⁴ m²s aufweist.

2. Verfahren nach Anspruch 1, **dadurch gekennzeichnet, dass** als Vinylester Vinylacetat eingesetzt wird.

3. Verfahren nach Anspruch 1 oder 2, **dadurch gekennzeichnet, dass** der Katalysator/Initiator an 3, 4 oder 5 Stellen in den Rohrreaktor injiziert wird.

4. Verfahren nach Ansprüchen 1 bis 3, **dadurch gekennzeichnet, dass** die Temperaturmaxima um weniger als ± 5°C voneinander differieren.

5. Verfahren nach Ansprüchen 1 bis 3, **dadurch gekennzeichnet, dass** als Katalysator/Initiator ein oder mehrere peroxidische Verbindungen eingesetzt werden.

6. Copolymere erhältlich nach einem Verfahren gemäß den Ansprüchen 1 bis 5.

7. Verwendung von Copolymeren gemäß Anspruch 6 zur Herstellung von Pigmentkonzentraten zur Kunststoffherstellung.

8. Pigmentkonzentrate enthaltend ein Copolymer gemäß Anspruch 6

## Claims

1. A process for copolymerizing ethylene with vinyl esters and, if desired, with further vinylic comonomers in a tube reactor having a length-to-diameter ratio in the range from 10,000 to 60,000 at pressures of from 500 to 4000 bar and at not more than 220°C, which comprises initiating the free-radical polymerization at two or more locations of the tube reactor by adding a catalyst/initiator and adjusting the temperature profile within the reactor such that the temperature maxima downstream of the initiation locations are from 200 to 220°C and differ by less than ±10°C from one another, wherein the proportion of the ethylene units is from 80 to 95 % by weight, the proportion of the vinyl ester units is from 5 to 20 % by weight and the proportion of other vinylic comonomer units is from 0 to 10 % by weight, based in each case on the overall mass of the copolymer, the copolymer having a viscosity of from 8 to 15 • 10⁻⁴ m²/s measured at 120°C.

2. A process as claimed in claim 1, wherein the vinyl ester employed is vinyl acetate.

3. A process as claimed in claim 1 or 2, wherein the catalyst/initiator is injected into the tube reactor at 3, 4 or 5 locations.

4. A process as claimed in claims 1 to 3, wherein the temperature maxima differ by less than ± 5°C from one another.

5. A process as claimed in claims 1 to 3, wherein one or more peroxide compounds are employed as catalyst/initiator.

6. A copolymer obtainable by a process as claimed in any of claims 1 to 5.

7. The use of a copolymer as claimed in claim 6 for producing a pigment concentrate for coloring plastics.

8. A pigment concentrate comprising a copolymer as claimed in claim 6.

## Revendications

1. Procédé de copolymérisation de l'éthylène avec des esters vinyliques et éventuellement d'autres copolymères vinyliques, dans un réacteur tubulaire ayant un rapport entre la longueur et le diamètre de 10000 à 60000, sous des pressions de 500 à 4000 bar et à des températures d'au plus 220°C, **caractérisé en ce que** la polymérisation radicalaire est amorcée en au moins deux points du réacteur tubulaire par addition d'un catalyseur/amorceur, et que le profil de température dans le réacteur est ajusté de façon que les maxima de températures, en arrière des points d'amorçage, soient compris entre 200 et 220°C et diffèrent les uns des autres de moins de ± 10°C, la proportion des motifs éthylène étant de 80 à 95 % en poids, la proportion des motifs ester vinylique étant de 5 à 20 % en poids et la proportion des autres motifs comonomères vinyliques étant de 0 à 10 % en poids, toutes les proportions étant rapportées au poids total du copolymère, et le copolymère ayant une viscosité, mesurée à 120°C, de 8 à 15.10⁻⁴ m²/s.

2. Procédé selon la revendication 1, **caractérisé en ce que** l'ester vinylique utilisé est l'acétate de vinyle.

3. Procédé selon la revendication 1 ou 2, **caractérisé en ce que** le catalyseur/amorceur est injecté en 3, 4 ou 5 points du réacteur tubulaire.

4. Procédé selon les revendications 1 à 3, **caractérisé en ce que** les maxima de températures diffèrent les uns des autres de moins de ± 5°C.

5. Procédé selon les revendications 1 à 3, **caractérisé en ce que** le catalyseur/amorceur utilisé est constitué d'un ou plusieurs composés peroxydés.

6. Copolymères pouvant être obtenus par un procédé selon les revendications 1 à 5.

7. Utilisation de copolymères selon la revendication 6 pour préparer des concentrés pigmentaires destinés à la coloration de matériaux plastiques dans la masse.

8. Concentrés pigmentaires contenant un copolymère selon la revendication 6.
